# EUROPEAN PATENT APPLICATION

(11) **EP 2 615 478 A1**
(43) Date of publication of application: **17.07.2013**
(21) Application number: 12151307.1
(22) Date of filing: 16.01.2012
(51) Int. Cl.: G02B 5/12

(54) **Retroreflective License Plate Sheeting Compatible with Laser Printing**

(71) Applicant: 3M Innovative Properties Company, Saint Paul, MN 55133-3427 (US)
(72) Inventor: Nguyen, Quoc Hiep, 41453 Neuss (DE); Nguyen, Trung Kien, 41453 Neuss (DE); Imhof, Joerg, 41453 Neuss (DE); Wright, John Clifford, Bracknell, RG12 8HT (GB); Scarsbrook, Matthew, Bracknell, RG12 8HT (GB)
(74) Representative: Towlson, Samantha Jayne

(57) **Abstract**

A retroreflective sheeting, particularly suitable for use as a licence plate retroreflective sheeting, is disclosed. The sheeting comprises a substrate, having a first surface and a second surface, and a layer of retroreflective material, also having a first surface and a second surface. The first surface of the retroreflective material is laminated to the first surface of the substrate. The sheeting also has a print reception layer, comprising a topcoat material comprising a blend of an saturated polyester resin component and a vinyl polymer component, provided on the second surface of the layer of retroreflective material. A cross-linking component may also be included. Preferably the print reception layer is laser printable.

## Description

The present invention relates to retroreflective sheeting, in particular a sheeting comprising a substrate and a layer of retroreflective material, suitable for use as a vehicle licence plate retroreflective sheeting and adapted to be laser printable.

Vehicle licence plates are used throughout the majority of countries in the world to identify a vehicle and/or owner, and although their format varies, indicate a state or country in which the vehicle carrying the plate is registered. Traditionally licence plates have been made of pressed metal or plastic, with raised and coloured numbers and letters. However, in more recent years there has been a move towards digitally produced licence plates, which typically comprise a printed plastic plate, with the print being provided either directly onto the plate or onto a film that is subsequently laminated or adhered to the plate. In some instances, the film is a retroreflective sheeting.

Two known types of retroreflective sheeting are cube corner sheeting and microsphere-based sheeting. Microsphere-based sheeting, sometimes referred to as "beaded" sheeting, employs a multitude of microspheres typically at least partially embedded in a binder layer and having associated specular or diffuse reflecting materials (e.g., pigment particles, metal flakes or vapour coats, etc.) to retroreflect incident light. Due to the symmetrical geometry of beaded retroreflectors, microsphere based sheeting exhibits the same total light return regardless of orientation, i.e. when rotated about an axis normal to the surface of the sheeting. Thus, such microsphere-based sheeting has a relatively low sensitivity to the orientation at which the sheeting is placed on a surface. In general, however, such sheeting has a lower retroreflective efficiency than cube corner sheeting. Cube corner retroreflective sheeting, sometimes referred to as "prismatic" sheeting, typically comprises a thin transparent layer having a substantially planar first surface and a second structured surface comprising a plurality of geometric structures, some or all of which include three reflective faces configured as a cube corner element, that enables incident light to be reflected back towards the light source but translated and parallel to the incident light, creating the retroreflective effect.

The use of retroreflective materials on vehicle licence plates is known, for example, from W02009/120398 (Buoni). This discloses a sheeting comprising a retroreflective material layer and a transparent roughened film layer, with the peaks in the roughened surface being located over and coupled to the microspheres forming the retroreflective material layer. Such sheeting is printable using thermal transfer printing methods due to the low surface roughness of the transparent layer. The sheeting itself is formed using an extrusion process. A second example of such sheeting used in vehicle licence plates is described in US20020006559 (Mehta). A transparent ink and toner receptive layer is formed on a retroreflective sheeting from a crosslinked acrylic acid resin. The coating may be mixed with a carrier material used to carry a dispersion of microspheres or provided separately. US 7,048,989 (Watkins) discloses a digitally printable water-borne acrylic topcoat that can be used with a retroreflective sheeting. Such topcoats are proposed as an alternative to urethane topcoats.

It is desirable however to be able to provide alternatives to such receptive materials, for example, to offer ease of manufacture or ease of laser printing.

The present invention aims to address this by providing a retroreflective sheeting, comprising a substrate, having a first surface and a second surface, a layer of retroreflective material, also having a first surface and a second surface, the first surface being attached to the first surface of the substrate, and a print reception layer, comprising a topcoat material, provided on the second surface of the layer of retroreflective material, wherein the topcoat material comprises a blend of at least one saturated polyester resin component and at least one vinyl polymer component.

An advantage of using a topcoat material comprising a blend of a vinyl polymer component and a saturated polyester resin component to form a print reception layer is that the pigment material used in a laser printing process keys easily with the print reception layer, which in turn bonds well with the underlying retroreflective material layer. This also makes the retroreflective sheeting particularly suitable for use as a vehicle licence plate retroreflective sheeting.

Preferably, the topcoat material further comprises a cross-linking agent.

Preferably, the cross-linking component comprises at least one of a methylated melamine formaldehyde resin and a polyisocyanate. Preferably the polyisocyanate is an aliphatic polyisocyanate.

Preferably, the saturated polyester resin component is modified with an isocyanate component.

The print reception layer may have a surface resistivity in the range of 1×10⁶ to 1×10⁸ ohms/m². Preferably, the print reception layer is laser printable.

The print reception layer may have an exposed surface, and this exposed surface may be porous.

The layer of retroreflective material may be attached to the first surface of the substrate by an adhesive layer.

Preferably, the substrate is a polyester terephthalate (PET) film. More preferably, the substrate is a low-shrinkage polyester terephthalate (PET) film.

The substrate may have a thickness in the range of 75µm to 125µm.

The layer of retroreflective material may comprise a carrier material having a plurality of microspheres dispersed therein. Alternatively, the layer of retroreflective material may comprise a prismatic material.

The present invention also provides for use of the sheeting according to any preceding claim as a vehicle licence plate retroreflective sheeting.

The present invention further provides a vehicle licence plate product comprising a substrate having a vehicle-facing surface and a road facing surface and having a layer of adhesive provided on the vehicle-facing surface, and sheeting as described above.

The present invention yet further provides for the use of a topcoat material comprising a blend of a saturated polyester resin component and a vinyl polymer component to form a print reception layer on a layer of retroreflective material forming a licence plate retroreflective sheeting.

The present invention will now be described by way of example only, and with reference to the accompanying drawings, in which:
Figure 1 is a schematic cross-section of a retroreflective sheeting in accordance with the present invention; and
Figure 2 is a schematic cross-section of a vehicle licence plate product having the sheeting shown in Figure 1 laminated thereto.

The present invention takes the approach of using a print reception layer that can itself be printed onto a layer of retroreflective material to enable a simple digital print method to be used to create text on a retroreflective sheeting, one which is particularly suitable for use as a vehicle licence plate retroreflective sheeting. Such sheeting may also be suitable for use on a road traffic sign. This simplifies the manufacturing process and the invention utilises a layer of topcoat material comprising a blend of a saturated polyester resin component and a vinyl polymer component. Topcoat material therefore, as used in the following description, describes such liquid toner vehicles, whereas the term pigment is used to distinguish the material used in a laser printing process, which is typically a powder that is fused thermally into the surface of the print reception layer. Consequently, the invention provides for the use of a topcoat material comprising a blend of a saturated polyester resin component and a vinyl polymer component to form a print reception layer on a layer of retroreflective material forming a retroreflective sheeting.

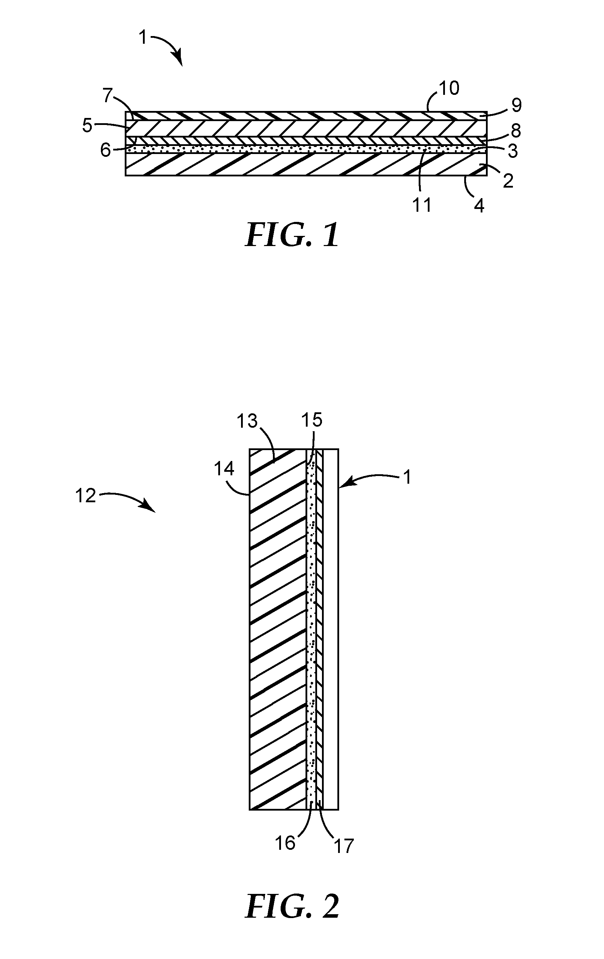

Figure 1 is a schematic cross-section of a retroreflective sheeting in accordance with the present invention. The sheeting 1 comprises a substrate 2, having a first surface 3 and a second surface 4. A layer of retroreflective material 5 is also provided, also having a first surface 6 and a second surface 7, the first surface 6 being provided with a reflective metallic layer 8 and laminated via the reflective metallic layer 8 to the first surface 3 of the substrate 2. A print reception layer 9 is provided on the second surface 7 of the layer of retroreflective material 5. The print reception layer 9 is formed from a topcoat material comprising a blend of a saturated polyester resin component and a vinyl polymer component, and has an exposed surface 10. The layer of retroreflective material 5 is attached to the first surface 3 of the substrate 2 by an adhesive layer 11 that contacts both the reflective metallic layer 8 and the substrate 2. Alternatively, metallic layer 8 is replaced by a sealing film, such as described, for example, in U.S. Patent No. 7, 7611,251 (Thakkar et al), incorporated herein by reference.

Figure 2 is a schematic cross-section of a vehicle licence plate product having the sheeting shown in Figure 1 attached thereto. The vehicle licence plate 12 typically comprises an acrylic plate 13 having a first surface 14 that faces towards the road and a second surface 15 that faces towards a vehicle. A layer of a pressure sensitive adhesive 16 is provided on the second surface 15 to enable the retroreflective sheeting 1 (as shown in Figure 1 but with detail omitted in Figure 2 for clarity) to be adhered to the acrylic plate 13. Once the retroreflective sheeting 1 has been printed, the layer of digital print 17 sits between the retroreflective sheeting 1 and the acrylic plate 13 at the interface with the pressure sensitive adhesive 16.

The print reception layer 9 functions as a laser printable print reception layer as it provides a surface to which the black or other pigment used in a laser printing process can bond to. When beaded retroreflective sheeting is used, printing directly onto the layer of retroreflective material can be problematic as the layer itself is often formed from a dispersion of reflective elements (microspheres) in a PVB (polyvinyl butyrate) slurry coating, which when dried and cured forms a generally smooth surface displaced between the peaks of the reflective elements. Keying of the ink on such a surface is difficult, and consequently the resultant final print quality may not be durable or aesthetically acceptable. The reflective elements create an overall macroscopic roughness that can in itself also cause difficulties with ink adhesion. Using a topcoat material comprising a blend of a saturated polyester resin component and a vinyl polymer component to form the print reception layer 9 creates a surface to which the pigment used in the laser printing process can bond easily. This is partly due to the upper surface of the print reception layer 9 being porous, a feature that favourably enables the pigment used in the laser printing process to melt into and bond with the topcoat material forming the print reception layer 9. By "porous" it is intended that the surface of the print reception layer 9 is permeable to the pigment used in laser printing. The degree of porosity can be influenced by the coating, drying and/or curing of the toner, and the ability of the laser pigment used in the laser printing process to melt into and bond with the toner forming the print reception layer 9. The topcoat material may be diluted with a solvent for ease of coating, and the solvent driven off during a curing and/or drying process to create a chemical bond between the topcoat material and the layer of retroreflective material 5. This coating process may be achieved using any suitable method, for example, a contact printing method. The chemical bonding of the topcoat material to the layer of retroreflective material 5 is also influenced by the resin contained within the topcoat material chosen. For example, the polyester resins contained within the topcoat material bond to the PVB resin material, in which the microspheres are dispersed in the retroreflective material, via an OH-bridge with free-hydroxyl functional groups present at the surface of the PVB resin. Polyester resins are particularly suitable for performing this task. Other components of the topcoat material may aid this by creating additional cross-linking between other resin materials and the free-hydroxyl functional groups present at the surface of the PVB resin material. The topcoat materials used in the present invention therefore comprise a blend of a saturated polyester resin component and a vinyl polymer component. In particular, suitable topcoat materials may comprise a blend of at least one saturated polyester resin component and at least one vinyl polymer component. In addition, any solvent used to dilute the topcoat material, or present in the topcoat material in its off-the-shelf concentration, may partially solubilise or dissolve the upper surface of the PVB resin material, giving a degree of physical bonding. Such features also make the sheeting ideal for use with other printing methods, such as thermal transfer printing processes.

It may also be desirable to use a cross-linking agent in the topcoat material. This enhances the cross-linking between the resin materials themselves and/or between the resin material and the free-hydroxyl functional groups on the surface of the PVB resin material. Suitable cross-linking agents include methylated and/or butylated melamine formaldehyde resin, triazine derivatives, and polyisocyantes. Examples of suitable melamine formaldehyde resins include those available under the trade designation "CYMEL 325" (from Cytec Industries Inc, 5 Garret Mountain Plaza, Woodland Park, New Jersey 07424, USA), "RESIMENE 717" and "RESIMENE 881" (from Ineos Melamines GmbH, Alt Fechenheim 34, 60386, Frankfurt am Main, Germany). Examples of suitable triazine derivatives include tris carbamoyl triazine, available under the trade designation "CYLINK 2000" (from Cytec Industries, as above). Examples of suitable polyisocyanates include hexamethylene diisocyanate (such as, for example, available under the trade designation "DESMODUR 3390BA" available in the UK from Bayer, Bayer House, Strawberry Hill, Newbury RG14 1JA) and triphenylmethane triisocianate (available under the trade designation "DESMODUR RE", from Bayer, as above). The saturated polyester resin component may also be modified with an isocyanate component.

It may also be desirable to use catalysts to accelerate the cross-linking reaction, such as, for example, sulfonic acid derivatives and tin-based catalysts, such as, for example, dibutyltin-dilaurate (DBTL) and tin(II)-ethylhexanoate.

To be able to function as a laser printable print reception layer 9, the exposed surface 10 of the print reception layer 9 ideally needs to be able to withstand temperatures of over 100°C, as typically found in commercially available laser printers suitable for printing retroreflective sheeting. Consequently, the print reception layer 9 should have a melting point of greater than 100°C. This enables it to withstand the laser printing process. Furthermore, in choosing appropriate topcoat material to form the print reception layer 9 it has been determined that the surface resistivity of the exposed surface 10 of the print reception layer 9 should be in the range of 1×10⁶ to 1×10⁸ ohms/m².

In addition, the optical properties of the print reception layer 9 are also an important consideration when choosing a suitable topcoat material. The print reception layer 9 should ideally be transparent to ensure minimum impact on colour and retroreflective performance. Transparent as used herein means that the print reception layer 9 is able to transmit at least about 70 percent of the intensity of the light incident upon it at a given wavelength. In some embodiments, the print reception layer 9 is able to transmit more than 80 percent, and in other embodiments, the print reception layer 9 is able to transmit more than 90 percent of incident light. The opalescence of the print reception layer 9 should be low, to minimise any scattering of the incident and retroreflective illumination. The refractive index *n* of the print reception layer 9 should be similar to that of the retroreflective material to reduce refraction effects at the boundary between the two materials. Furthermore, the surface energy characteristics of the print reception layer 9 should be compatible with the wetting characteristics of the pigment used in the laser printing process.

Preferably, the substrate 2 is a polyester terephthalate (PET) film, preferably a low-shrinkage polyester terephthalate (PET) film. An untreated PET film, which is a film having an initial low surface roughness and having been exposed to no treatments that could alter this surface roughness, is particularly preferred. However, other PET films having surface treatments are also suitable. Films having a nominal thickness in the range 75µm to 125µm are also suitable. The thickness of the film should be selected to ensure that the resulting sheeting passes easily though a laser printer (if too thin the risk of blockage within the printer or damage to the sheeting increases and if too thick the sheeting does not pass through the printer at all) and to ensure that the thermal diffusivity of the print reception layer 9 is compatible with the melt characteristics of the laser toner particles.

The thickness of the print reception layer 9 is preferably in the range of 0.5µm to 2.0µm. Too thin a layer makes printing difficult, and too thick a layer gives no additional noticeable benefit to the appearance of the final licence plate product. Preferably a polymeric topcoat material comprising a blend of a saturated polyester resin component and a vinyl polymer component is used to form the print reception layer 9, such as the resin mixture described below. A contact printing method is preferred as the means by which the print reception layer 9 is applied to the layer of retroreflective material 5.

Although in the embodiment described above and the example given below a retroreflective material comprising reflective microspheres is used as the layer of retroreflective material, it may be desirable, as an alternative, to use a layer of a prismatic material. For example, a layer of cube-corner retroreflective elements may be used as the layer of retroreflective material. Also, rather than using a metallic layer 8 a seal film may be used with the layer of retroreflective material comprising cube-corner elements to provide an air interface.

In the above embodiment and the following example an acrylic plate is used to mount the retroreflective sheeting 1 to form a vehicle licence plate. However, as an alternative an aluminium plate may be used and the retroreflective sheeting 1 applied to a surface of such a plate to form a vehicle licence plate.

An example of the retroreflective sheeting 1 shown in Figure 1 and suitable for use as vehicle licence retroreflective sheeting, was made as follows. A polyester terephthalate film, having a thickness of 100µm, was used as a substrate. The retroreflective material chosen was a bead coat layer formed from a slurry-coated layer comprising a monolayer dispersion of microspheres, and having a thickness of approximately 70µm to 80µm. A vapour coated layer of aluminium was provided on the back surface of the bead coat layer. The layer of retroreflective material was bonded to the PET film using an ethylene vinyl acetate (EVA) adhesive.

To create the print receptor layer a topcoat material comprising a resin material having the composition shown in Table 1 was used. This was diluted to a concentration of 40% using methyl ethyl ketone (MEK) as a solvent, and coated onto the retroreflective material layer using a contact printing method to achieve a maximum nominal thickness in the range 1µm to 5µm. The topcoat material had, among other components, a saturated polyester resin (as shown below) component, and proved to be particularly suitable for forming the print reception layer 9. The resulting topcoat material had comprising a blend of a saturated polyester resin component and a vinyl polymer component present in the range 1 - 10 wt% based on the total weight of the topcoat composition. The vinyl polymer component was present in the range 10 - 30wt% based on the total weight of the topcoat composition. Consequently, the topcoat material comprised a blend of at least one saturated polyester resin component and at least one vinyl polymer component.

**Table 1**

| **Component** | **Description** | **Wt%** |
|---|---|---|
| VAGH | PVC/PVAC co-polymer | 72.74 |
| Mark V 1923 | Ba/Zn heat stabiliser | 0.13 |
| Paraplex 662 | Plasticiser | 7.70 |
| Tinuvin 292 | UV stabilser | 0.11 |
| Tinuvin 1130 | UV stabiliser | 0.11 |
| Uralac CP 1049 | Saturated polyester resin with isocyanate | 16.33 |
| Resimine 881 | Methylated melamine formaldehyde resin | 2.57 |
| Desmodur 3390BA | Aliphatic isocyanate (HDI trimer) | 0.32 |

This was then dried at a temperature of 110°C (± 10%) until the solvent was driven off and the print reception layer 9 was dry to touch. The print reception layer 9 exhibited required levels of transmittance (5) and opalescence. The resulting sheeting was then printed using two different laser printers, B6350 and B431, available from OKI Printing Solutions, 550 Dundee Road, Slough, Berkshire, SL1 4LE, United Kingdom. Text was printed using printer settings designed to replicate the appearance of existing licence plate products to produce a sheeting having black lettering thereon. The sheeting was subsequently laminated into a licence plate product.

The quality of the resultant sheeting was assessed using a number of different criteria. Some of these were in relation to the appearance of the sheeting 1 "as is", that is, after production and before lamination within a licence plate construction, and some in relation to the appearance of an overall laminated licence plate product.

### 1. Showthrough

Showthrough is related to the appearance of the printed region to the naked eye in terms of density of the black pigmented printed regions. Areas that appear to be feint to the naked eye represent areas where there is some showing through of the print reception layer 9. This can be an overall effect or present only in certain discrete areas. In samples made according to the above example the print density had a solid, uniform appearance to the naked eye on both the sheeting "as is" and following lamination. This is a critical factor as retroreflective sheeting often has a "sparkly" appearance before printing, and so a dense black print is necessary to prevent any of this "sparkly" appearance from showing through in the printed regions.

### 2. Dots/Dropout

Dots or dropout are terminologies to describe areas where there is a complete absence of printing, as these typically resemble white dots within the black printed regions. Samples made in accordance with the example described above showed minimal appearance of dots.

### 3. Abrasion Resistance

Following printing the lettering created on the sheeting needs to be abrasion resistant to the extent that it can withstand rubbing with a finger or other light abrasion, for example, being dragged across a work surface, clothing or similar. Samples made in accordance with the above example were tested both with light rubbing using a finger and with positioning Scotch™ tape on the printed region and subsequent peeling off. The black print proved to be resilient to minor abrasions of this type.

### 4. Banding

Banding is an artefact caused by the passage of the sheeting through the printer, for example, the effect of static electricity created by the movement of the substrate across the rollers. This results in distinctive bands of denser ink being seen on the resulting print. The ability of a sample to resist banding therefore is dependent on the choice of the PET film used as the substrate, as well as the coating and curing of the print reception layer 9. Both the "as is" and laminated samples made in accordance with the above example showed minimal banding to the naked eye.

### 5. Lamination Appearance

Once laminated behind an acrylic plate as shown in Figure 2 to form a licence plate product it is vital that the ink density and therefore the overall black appearance of the printed letters obtained using laser printing is sufficient to meet the relevant safety standards, such as BSAU145d. The appearance is also affected by any texture or roughness effects produced by the printing process, as this can also detract from an overall impression of a uniform, dense black in colour. Following lamination samples made in accordance with the above example were viewed side-by-side with a thermal transfer licence plate product, and appeared to be visually equivalent to the naked eye.

Consequently, forming the print reception layer 9 from a topcoat material produced a sheeting that could be laser printed successfully and give results comparable with existing thermal transfer methods of printing such sheeting. A further advantage of such an approach is that existing retroreflective sheeting materials may be treated to ensure laser printability by using a print reception layer 9 formed from a topcoat material as in the above example.

## Claims

1. Retroreflective sheeting, comprising:
a substrate, having a first surface and a second surface,
a layer of retroreflective material, also having a first surface and a second surface, the first surface being attached to the first surface of the substrate, and
a print reception layer, comprising a topcoat material, provided on the second surface of the layer of retroreflective material, wherein the topcoat material comprises a blend of at least one saturated polyester resin component and at least one vinyl polymer component.

2. Sheeting according to claim 1, wherein the topcoat material further comprises a cross-linking agent.

3. Sheeting according to claim 2, wherein the cross-linking agent comprises at least one of a methylated melamine formaldehyde resin and a polyisocyanate.

4. Sheeting according to claim 3, wherein the polyisocyanate is an aliphatic polyisocyanate.

5. Sheeting according to claim 1, 2, 3 or 4, wherein the saturated polyester resin component is modified with an isocyanate component.

6. Sheeting according to any of claims 1 to 5 wherein the print reception layer has a surface resistivity in the range of 1×10⁶ to 1×10⁸ ohms/m².

7. Sheeting according to any of claims 1 to 6, wherein the print reception layer is laser printable.

8. Sheeting according to any preceding claim, wherein the print reception layer has an exposed surface and the exposed surface is porous.

9. Sheeting according to any preceding claim, wherein the layer of retroreflective material is attached to the first surface of the substrate by an adhesive layer.

10. Sheeting according to any preceding claim, wherein the substrate is a polyester terephthalate (PET) film.

11. Sheeting according to claim 10, wherein the substrate is a low-shrinkage polyester terephthalate (PET) film.

12. Sheeting according to any of claims 10 or 11, wherein the substrate has a thickness in the range of 75µm to 125µm.

13. Sheeting according to any preceding claim, wherein the layer of retroreflective material comprises a carrier material having a plurality of microspheres dispersed therein.

14. Sheeting according to any of claims 1 to 13, wherein the layer of retroreflective material comprises a prismatic material.

15. Use of the sheeting according to any preceding claim as a vehicle licence plate retroreflective sheeting.

16. Vehicle licence plate product comprising a substrate having a vehicle-facing surface and a road facing surface and having a layer of adhesive provided on the vehicle-facing surface, and sheeting as claimed in any of claims 1 to 14.

17. Use of a topcoat material comprising a blend of a saturated polyester resin component and a vinyl polymer component to form a print reception layer on a layer of retroreflective material forming a licence plate retroreflective sheeting.
